# EUROPÄISCHE PATENTSCHRIFT

(11) **EP 2 828 436 B1**
(45) Veröffentlichungstag und Bekanntmachung des Hinweises auf die Patenterteilung: **25.05.2016**
(21) Anmeldenummer: 13710852.8
(22) Anmeldetag: 19.03.2013
(51) Int. Cl.: E02D 27/42, E02D 27/52

(54) **OFFSHORE-FUNDAMENT FÜR WINDENERGIEANLAGEN MIT BOGENFÖRMIG GEKRÜMMTEN KNOTEN**
OFFSHORE FOUNDATION FOR WIND ENERGY PLANTS WITH NODES BENT IN AN ARCH SHAPE
FONDATION OFFSHORE COMPRENANT DES NOEUDS RECOURBÉS EN ARC DE CERCLE

(30) Priorität: 19.03.2012 DE 202012002730 U
(43) Veröffentlichungstag der Anmeldung: 28.01.2015
(73) Patentinhaber: Reales Bertomeo, Emilio, 27367 Horstedt (DE)
(72) Erfinder: Reales Bertomeo, Emilio, 27367 Horstedt (DE)
(74) Vertreter: Eisenführ Speiser
(86) Internationale Anmeldenummer: PCT/EP2013/055739
(87) Internationale Veröffentlichungsnummer: WO 2013/139816

(56) Entgegenhaltungen:
- DE-U1-202011 101 599
- US-A- 4 091 982

## Beschreibung

Die Erfindung betrifft eine Offshore-Tragstruktur für Windenergieanlagen, mit mehreren übereinander angeordneten Horizontalringen, welche jeweils durch mehrere Stabwerkelemente im Wesentlichen koaxial zueinander verbunden sind. Ferner betrifft die Erfindung einen Verbindungs-Knoten für eine Offshore-Tragstruktur für Windenergieanlagen.

Seit einiger Zeit werden Windenergieanlagen nicht nur "Onshore", also an Land, sondern verstärkt auf dem Meer "Offshore" installiert, beispielsweise in sog. Offshore-Windparks in der Nord- und Ostsee. Die Offshore-Windenergieanlagen sind extremen Bedingungen ausgesetzt. Sie werden, beispielsweise in 20 bis 60 m Meerestiefe mithilfe eines Fundaments verankert. Das Fundament, welches auch als Tragstruktur bezeichnet werden kann, ist hohen mechanischen und chemischen Belastungen sowie Meeresströmungen ausgesetzt. Verschiedene Typen von Offshore-Fundamenten sind bekannt, beispielsweise Monopile-, Jacket-, Tripod-, Tripile- oder Bucket-Konstruktionen. Die vorliegende Erfindung betrifft in erster Linie eine sog. Jacket-Konstruktion. Diese ist eine Stabwerkkonstruktion, bevorzugt aus Stahl errichtet.

Eine Tragstruktur der eingangs genannten Art ist beispielsweise in DE 20 2011 101 599 U1 offenbart. Eine dort offenbarte Tragstruktur weist mehrere, vorzugsweise sechs im Meeresgrund verankerbare, insbesondere rohrförmige Pfähle, und eine mit den Pfählen verbindbare, aus einer Vielzahl von Stäben, insbesondere Stahlrohren, zusammengesetzte Stabwerkstruktur auf. Die einzelnen Stäbe der Stabwerkstruktur sind mittels verschiedener Knoten, wie beispielsweise Kreuzknoten, Mittelknoten und Fußknoten miteinander verbunden. Die einzelnen Knoten sind ebenfalls aus Stäben bzw. Rohren gebildet, die in entsprechenden Winkeln miteinander verschweißt sind.

Generell lassen sich derartige in DE 20 2011 101 599 U1 vorgeschlagenen Offshore-Tragstrukturen vorteilhaft für Offshore-Windparks einsetzen. Allerdings besteht Bedarf daran, diese Konstruktionen weiter zu verbessern, insbesondere hinsichtlich des Fertigungsaufwands, des Materialverbrauchs sowie der Stabilität.

Aufgabe der vorliegenden Erfindung ist es daher, eine Tragstruktur der eingangs genannten Art anzugeben, die hinsichtlich des Fertigungsaufwands, des Materialverbrauchs und/oder der Stabilität verbessert ist.

Die Erfindung löst die Aufgabe durch eine Offshore-Tragstruktur mit den Merkmalen des Anspruchs 1, also insbesondere durch eine Tragstruktur mit mehreren übereinander angeordneten Horizontalringen, welche jeweils durch mehrere Stabwerkelemente im Wesentlichen koaxial zueinander verbunden sind, wobei die Horizontalringe bogenförmig gekrümmte Abschnitte aufweisen.

Indem die Horizontalringe bogenförmig gekrümmte Abschnitte aufweisen, werden Schweißnähte vermieden. Bei bisher bekannten Tragstrukturen wurden stets gerade Stäbe oder Rohre verwendet, die, um Horizontalringe zu bilden, geschnitten und unter Winkeln miteinander verschweißt wurden. Erfindungsgemäß ist dies nicht mehr erforderlich, da die Horizontalringe bogenförmig gekrümmte Abschnitte aufweisen. Indem weniger Schweißnähte an der Tragstruktur vorgesehen sind, ist die Herstellung vereinfacht. Ferner ist auch die Stabilität verbessert, da Schweißnähte stets auch eine Schwächung des Materials bedeuten und anfällig für Fehler sind, insbesondere wenn sie von Hand vorgenommen werden. Dies gilt insbesondere bei dynamischen Belastungen, denen die Offshore-Tragstrukturen ausgesetzt sind. Ferner reduziert sich durch das Entfallen von den zusätzlichen Bearbeitungsschritten auch der Materialverbrauch.

Sämtliche Begriffe wie horizontal, vertikal, oben, unter und oben- und untenliegend, beziehen sich auf eine übliche Aufstellungsrichtung der Tragstruktur. Der Begriff Horizontalring bzw. Ring bezieht sich hier auf eine geschlossene umlaufende Struktur, die nicht zwangsläufig kreisförmig ist. Bevorzugt sind ebenfalls polygonale und/oder elipsoide Formen, wobei vorzugsweise die Ecken derartiger Polygonformen durch bogenförmig gekrümmte Abschnitte ersetzt sind. Die Tragstruktur weist mehrere übereinander angeordnete Horizontalringe auf, die entsprechend mehrere Etagen der Tragstruktur definieren. Die einzelnen Etagen sind im Wesentlichen tubulär. Die Stabwerkelemente sind dazu vorgesehen, die Horizontalringe beabstandet zu verbinden. Die Stabwerkelemente übertragen Kräfte von einem Kopfende der Offshore-Tragstruktur, an der beispielsweise eine Aufnahme für eine Windenergieanlage angeordnet ist, zu einem Fußende der Offshore-Tragstruktur, mittels dem diese beispielsweise auf dem Meeresgrund verankert ist.

Vorzugsweise sind die Stabwerkelemente dabei ringförmig benachbart zueinander angeordnet, wobei jeweils wenigstens ein unterer Schenkel des Stabwerkelements mit einem unteren Horizontalring und wenigstens ein oberer Schenkel mit einem oberen Horizontalring verbunden ist. Die Stabwerkelemente sind beispielsweise als Kreuzelemente ausgebildet und weisen zwei kreuzförmig verschränkte Stäbe auf. Die kreuzförmig verschränkten Stäbe sind vorzugsweise miteinander verbunden, beispielsweise geschweißt. Alternativ ist ein Stabwerkelement aus vier Stäben gebildet, die mittels eines Verbindungsstücks, beispielsweise kreuzförmigen Verbindungsstücks, miteinander verbunden sind. Weiter alternativ ist ein derartiges Stabwerkelement als Doppel-U-Konstruktion ausgebildet. Auch sind Stabwerkelemente bevorzugt, die zwei oder mehr unverschränkte Streben aufweisen, welche abschnittsweise oder vollständig bogenförmig gekrümmt sind, wobei diese vorzugsweise mit ihren bogenförmig gekrümmten Abschnitten zueinander hin angeordnet sind und Verbindungselemente aufweisen, mittels denen sie im Bereich der gekrümmten Abschnitte miteinander verbunden sind. Demnach weist jedes Stabwerkelement vorzugsweise zwei Schenkel auf, die mit einem oberen Horizontalring verbunden sind und zwei Schenkel, die mit einem unteren Horizontalring verbunden sind. Die Schenkel sind vorzugsweise jeweils schräg bezogen auf eine Vertikalachse angeordnet. Dadurch lassen sich Torsionskräfte vorteilhafter übertragen.

Gemäß einer bevorzugten Weiterbildung sind Schnittpunkte zweier benachbarter Schenkel benachbarter Stabwerkelemente mit dem jeweiligen Horizontalring beabstandet voneinander. Dadurch fallen Verbindungspunkte von zwei benachbarten Schenkeln mit einem Horizontalring nicht zusammen. Sind beispielsweise die Schenkel der Stabwerkelemente mit dem Horizontalring verschweißt, fallen so Schweißnähte nicht zusammen, wodurch die Herstellung vereinfacht ist und ferner auch die Stabilität verbessert ist, da überlappende Schweißnähte vermieden werden. Dabei ist vorzugsweise keine Längsachse eines Stabs eines Stabwerkelements von dem Kopf der Tragstruktur bis zu dem Fuß der Tragstruktur durchgehend, sondern es findet stets eine Unterbrechung bzw. ein Richtungswechsel der Längsachsen der einzelnen Stäbe an jedem Horizontalring statt. Das heißt, Längsachsen von Stäben, die an einer Verbindungsstelle aufeinandertreffen sind nicht parallel zueinander. Auch dadurch ist die Stabilität weiter verbessert.

Gemäß einer bevorzugten Weiterbildung ist wenigstens der Abschnitt des Horizontalrings, welcher zwischen zwei Schnittpunkten mit benachbarten Stabwerkelementen liegt, bogenförmig gekrümmt. Die Schenkel der benachbarten Stabwerkelemente laufen vorzugsweise schräg aufeinander zu, ehe sie in der Verbindung mit dem Horizontalring enden. Eine Krafteinleitung von den Stabwerkelementen zum Horizontalring findet daher ebenfalls schräg aufeinander zu statt. Indem der Bereich zwischen diesen Schnittpunkten bogenförmig gekrümmt ausgebildet ist und vorzugsweise die Schnittpunkte beabstandet voneinander sind, wird eine vorteilhafte Krafteinleitung erreicht, wodurch die Stabilität der Tragstruktur verbessert ist. Die Kraft wird über den bogenförmig gekrümmten Abschnitt übertragen, der erfindungsgemäß frei von Schweißnähten ist.

In einer bevorzugten Ausführungsform ist jeweils der Abschnitt eines Horizontalrings zwischen zwei Schnittpunkten mit zwei oder mehr Schenkeln desselben Stabwerkelements gerade ausgebildet. Dadurch ist die Konstruktion vereinfacht, da gerade Stäbe einfach zu verarbeiten sind. Zudem können gerade Stäbe besonders gut auf Zug oder Druck belastet werden, so dass auch die Stabilität erhöht ist.

In einer weiteren bevorzugten Ausführungsform ist jeweils der Abschnitt eines Horizontalrings zwischen zwei Schnittpunkten mit zwei oder mehr Schenkeln desselben Stabwerkelements bogenförmig gekrümmt ausgebildet. Die Krümmung dieses Abschnitts kann unterschiedlich von der Krümmung des Abschnitts sein, welcher zwischen zwei Schnittpunkten zweier Schenkel zweier benachbarter Stabwerkelemente angeordnet ist. Sowohl Krümmungsradius als auch Krümmungsrichtung können hierbei verschieden sein. Hierdurch lässt sich der Horizontalring besonders vorteilhaft an Gegebenheiten oder spezielle Lastfälle anpassen. Zudem ist sowohl die Krafteinleitung optimal möglich, indem für jeden Abschnitt bzw. jedes Segment eines Horizontalrings eine passende Krümmung vorgesehen werden kann.

Besonders bevorzugt ist der Horizontalring kreisförmig ausgebildet. Vorzugsweise ist der gesamte Horizontalring kreisförmig ausgebildet. In einer Alternative ist der Horizontalring als einstückiger Horizontalring kreisförmig ausgebildet. Er weist vorzugsweise vorgefertigte Verbindungsstellen auf, an denen Schenkel von Stabwerkelementen anschließbar sind, beispielsweise mittels Schweißen. In einer anderen Alternative besteht der Horizontalring aus vorgefertigten Ringsegmenten, die zu dem Horizontalring zusammensetzbar sind. Insbesondere eine Kreisform eines Horizontalrings ist einfach herstellbar. Ferner können, indem der Horizontalring kreisförmig ausgebildet ist, größere Montagetoleranzen vorgesehen werden, da der Horizontalring symmetrisch ist und so Stabwerkelemente an belieben Stellen befestigbar sind. Dadurch ist die Herstellung der Tragstruktur weiter vereinfacht.

In einer bevorzugten Weiterbildung sind zur Verbindung der Stabwerkelemente mit den Horizontalringen Verbindungs-Knoten vorgesehen. Derartige Verbindungs-Knoten sind vorzugsweise vorgefertigt und bestehen aus einer Mehrzahl an zusammengeschweißten Rohrstücken, so dass die Stabwerkelemente mit den Horizontalringen verbindbar sind. Die Verbindungs-Knoten können dabei auch Segmente des Horizontalrings bilden. Dadurch ist die Montage weiter vereinfacht, da eine Vielzahl von Elementen schon vorgefertigt herstellbar ist.

Dabei weist der Verbindungs-Knoten vorzugsweise wenigstens vier Stabwerk-Aufnahmen, jeweils zwei für zwei obere Stabwerkelemente und zwei für zwei untere Stabwerkelemente, auf. Als Aufnahme werden hier Mittel zum Befestigen der Stabwerkelemente an den Verbindungs-Knoten verstanden. Eine derartige Aufnahme kann beispielsweise ein Rohrstumpf sein, an den ein Rohr eines Stabwerkelements beispielsweise mittels einer Stumpfnaht anschweißbar ist. Bevorzugt sind die Aufnahmen als Doppelrohrkonstruktionen ausgebildet, indem an der Aufnahme ein Rohr eines kleineren Durchmessers als ein Rohr eines Stabwerkelements angeordnet ist, so dass das Rohr des Stabwerkelements auf das Rohr an der Aufnahme aufsteckbar ist. Zur zusätzlichen Befestigung kann dann eine Schweißnaht vorgesehen sein, die beispielsweise mittels Orbitalschweißen einbringbar ist. So ist die Montage weiter vereinfacht.

Vorzugsweise weist der Verbindungs-Knoten ferner zwei Ringsegment-Aufnahmen für Segmente des Horizontalrings auf. Gemäß diesem Ausführungsbeispiel bildet der Verbindungs-Knoten einen Abschnitt des Horizontalrings.

Vorzugsweise ist der Verbindungs-Knoten dabei wenigstens abschnittsweise bogenförmig gekrümmt. Vorzugsweise bildet der Verbindungs-Knoten so den bogenförmig gekrümmten Abschnitt des Horizontalrings. Der Verbindungs-Knoten ist dabei vorzugsweise derart bogenförmig gekrümmt, dass zwei benachbarte Ringsegmente des Horizontalrings mittels des Verbindungs-Knotens in einem Winkel zueinander verbindbar sind. Vorzugsweise ist der Verbindungs-Knoten aus einem länglichen gekrümmten Rohr gebildet, welches an beiden Enden jeweils eine Ringsegmentaufnahme ausbildet. An diesem gekrümmten Rohr, welches den Grundkörper des Verbindungs-Knotens bildet, sind vorzugsweise vier Rohrstümpfe angebracht, welche jeweils eine der Stabwerkaufnahmen bilden. Dies ist eine besonders einfache Konstruktion, die sich zudem "off-site" vorfertigen lässt, wodurch die Montage weiter vereinfacht ist. Ferner ist so nur eine minimale Anzahl an Schweißnähten notwendig, wodurch die Stabilität verbessert ist.

Vorzugsweise ist der bogenförmig gekrümmte Abschnitt abschnittsweise oder vollständig kreisbogenförmig und/oder parabelförmig und/oder ellipsenförmig ausgebildet. Diese Arten bogenförmiger Krümmungen sind besonders bevorzugt. Sie lassen sich mittels herkömmlicher Maschinen herstellen und bieten eine gute Krafteinleitung. Sämtliche genannten bogenförmigen Krümmungen bieten einen glatten, knickfreien Übergang einzelner Horizontalringabschnitte in den anderen, sodass die Stabilität erhöht und auch die Lebensdauer der Tragstruktur verlängert ist, da Einkerbungen in das Material vermieden werden.

Gemäß einer weiteren bevorzugten Ausführungsform sind in jeder Etage der Tragstruktur drei oder mehr, insbesondere vier, fünf oder sechs, Stabwerkelemente vorgesehen. Diese können vorzugsweise im Wesentlichen eine X-Form bilden. Die Etagen der Tragstruktur werden vorzugsweise durch die Horizontalringe definiert. Dabei kann sich auch die Form des Horizontalrings an der Anzahl an Stabwerkelementen orientieren. Sind beispielsweise drei Stabwerkelemente in einer Etage vorgesehen, ist der Horizontalring vorzugsweise mit einer dreieckigen Grundform ausgestattet, wobei die Ecken durch bogenförmig gekrümmte Abschnitte ersetzt sind. Entsprechendes gilt für vier, fünf oder sechs Stabwerkelemente in einer Etage. Bei sechs Stabwerkelementen in einer Etage ist die Grundform des Horizontalrings vorzugsweise sechseckig, wobei ebenfalls die Ecken durch bogenförmig gekrümmte Abschnitte ersetzt sind.

Bevorzugt ist an einem Ende der Tragstruktur ein Grundring angeordnet, an dem Füße zur Verbindung mit einem Fundament montiert sind. Ein derartiges Fundament kann beispielsweise ein Betonfundament zum Aufsetzen auf den Meeresboden umfassen oder Rammpfähle, die in den Meeresgrund gerammt werden. Die Füße sind vorzugsweise dazu vorgesehen, mit einem derartigen Fundament zusammenzuwirken. Beispielsweise sind die Füße mit Rammpfählen, welche in den Meeresboden getrieben sind, zu vergrouten. Bevorzugt ist der Grundring entsprechend den oben beschriebenen Horizontalringen ausgebildet.

Ferner ist bevorzugt, an einem dem Grundring gegenüberliegenden Ende der Tragstruktur einen Kopfring mit einer Schnittstelle zur Montage eines Turms einer Windenergieanlage anzuordnen. Vorzugsweise ist ferner eine Plattform an dem Kopfende vorgesehen, über die Servicepersonal den Turm der Windenergieanlage betreten kann.

Weiterhin ist bevorzugt, dass die Stabwerksegmente im Wesentlichen aus HFI-(Hochfrequenz-Induktionsschweißen)-Rohren zusammengesetzt sind. Solche Rohre sind gut verfügbar und auf einfache Art und Weise herstellbar, indem Bleche gewalzt, zu Rohren gebogen und anschließend mit einer längs verlaufenden HFI-Schweißnaht geschlossen werden. Die Bildung der Tragstruktur aus derartigen Rohren ist vorteilhaft, da so Kosten reduziert werden können. Des Weiteren sind Herstellungszeiten für eine derartige Tragstruktur verkürzt, da HFI-Rohre gut auf dem Markt verfügbar sind. Auch der Einsatz von nahtlos gewalzten und spiralnaht geschweißten Rohren führt zu den beschriebenen Vorteilen und ist erfindungsgemäß auch bevorzugt.

Vorzugsweise sind die einzelnen Rohre mittels Orbitalschweißen miteinander oder dem jeweiligen Verbindungs-Knoten verbunden. Dies ist insbesondere vorteilhaft, wenn die Knoten aus Doppelrohrstrukturen gebildet sind. Dann ist ein Rohr auf das vorstehende kleinere Rohr des Knotens aufschiebbar und mittels Orbitalschweißen mit dem Knoten verbindbar. Dazu weist der Rohrstumpf des Knotens vorzugsweise einen Außendurchmesser auf, der im Wesentlichen dem Außendurchmesser des Rohres entspricht. Orbitalschweißen ist ein Verfahren, das sich besonders gut dazu eignet, derartige Rohrstrukturen miteinander zu verbinden. Dadurch ist die Wirtschaftlichkeit der Produktion der Tragstruktur weiter verbessert, wodurch Kosten reduziert werden. Ferner lassen sich mit Orbitalschweißen auf einfache Art und Weise Schweißnähte von hoher Güte erzeugen, wodurch die Lebensdauer und die Tragfähigkeit der Tragstruktur verbessert werden. Ferner ist bevorzugt, dass die Rohre eine Wanddicke von bis zu etwa 30 mm, vorzugsweise etwa im Bereich von 25,4 mm aufweisen und/oder im Warmbreitbandverfahren hergestellt sind. Dazu kann beispielsweise Grobblech genutzt werden. Derartige Wanddicken eignen sich besonders gut für die Tragstruktur. Sie bieten eine ausreichende Stabilität, ohne unnötig hohen Materialverbrauch zu erzeugen. Dadurch werden auch die Kosten gesenkt. Ferner ist ein Warmbreitbandverfahren eine einfache Möglichkeit, derartige Rohre herzustellen.

In einem weiteren Aspekt wird die eingangs genannte Aufgabe durch einen Verbindungs-Knoten für eine Offshore-Tragstruktur für Windenergieanlagen, insbesondere nach einer der vorstehend bevorzugten Ausführungsformen zur Verwendung in einer Tragstruktur nach einer der bevorzugten Ausführungsformen gelöst. Derartige Verbindungs-Knoten sind vorzugsweise vorgefertigt und bestehen aus einer Mehrzahl an zusammengeschweißten Rohrstücken, so dass die Stabwerkelemente mit den Horizontalringen verbindbar sind. Die Verbindungs-Knoten sind vorzugsweise dazu vorgesehen, Segmente eines Horizontalrings zu bilden. Dabei weist der Verbindungs-Knoten vorzugsweise wenigstens vier Stabwerk-Aufnahmen, jeweils zwei für zwei obere Stabwerkelemente und zwei für zwei untere Stabwerkelemente, auf. Als Aufnahme werden hier Mittel zum Befestigen der Stabwerkelemente an den Verbindungs-Knoten verstanden. Eine derartige Aufnahme kann beispielsweise ein Rohrstumpf sein, an den ein Rohr eines Stabwerkelements beispielsweise mittels einer Stumpfnaht anschweißbar ist. Bevorzugt sind die Aufnahmen als Doppelrohrkonstruktionen ausgebildet, indem an der Aufnahme ein Rohr eines kleineren Durchmessers als ein Rohr eines Stabwerkelements angeordnet ist, so dass das Rohr des Stabwerkelements auf das Rohr an der Aufnahme aufsteckbar ist. Zur zusätzlichen Befestigung ist vorzugsweise eine Schweißnaht vorgesehen, die beispielsweise mittels Orbitalschweißen einbringbar ist. Vorzugsweise ist der Verbindungs-Knoten dabei wenigstens abschnittsweise bogenförmig gekrümmt. Vorzugsweise bildet der Verbindungs-Knoten so den bogenförmig gekrümmten Abschnitt des Horizontalrings. Der Verbindungs-Knoten ist dabei vorzugsweise derart bogenförmig gekrümmt, dass zwei benachbarte Ringsegmente des Horizontalrings mittels des Verbindungs-Knotens in einem Winkel zueinander verbindbar sind. Vorzugsweise ist der Verbindungs-Knoten aus einem länglichen gekrümmten Rohr gebildet, welches an beiden Enden jeweils eine Ringsegmentaufnahme ausbildet. An diesem gekrümmten Rohr, welches den Grundkörper des Verbindungs-Knotens bildet, sind vorzugsweise vier Rohrstümpfe angebracht, welche jeweils eine der Stabwerkaufnahmen bilden. Hierdurch ist die Montage von Offshore-Tragstrukturen wesentlich vereinfacht.

Im Folgenden wird die Erfindung anhand mehrerer Ausführungsbeispiele unter Bezugnahme auf die beiliegenden Figuren näher erläutert. Hierbei zeigen:
Fig. 1 eine Offshore-Tragstruktur gemäß einem ersten Ausführungsbeispiel;
Fig. 2 eine Offshore-Tragstruktur gemäß einem zweiten Ausführungsbeispiel;
Fig. 3 eine Offshore-Tragstruktur gemäß einem dritten Ausführungsbeispiel;
Fig. 4 eine Detailansicht eines Verbindungs-Knotens für eine Offshore-Tragstruktur gemäß einem der Ausführungsbeispiele 1 bis 3;
Fig. 5 eine Offshore-Tragstruktur gemäß einem vierten Ausführungsbeispiel;
Fig. 6 eine Offshore-Tragstruktur gemäß einem fünften Ausführungsbeispiel; und
Fig. 7 eine Offshore-Tragstruktur gemäß einem sechsten Ausführungsbeispiel.

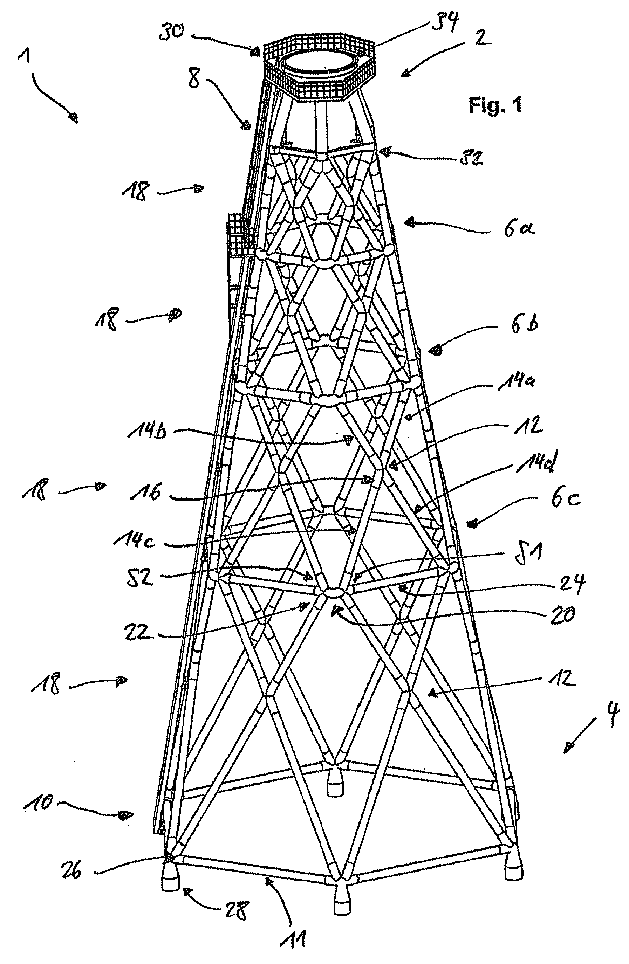

Gemäß Fig. 1 weist eine Offshore-Tragstruktur 1 ein Kopfende 2 sowie ein Fußende 4 auf. Zwischen dem Kopfende 2 und dem Fußende 4 sind mehrere Horizontalringe 6a, 6b, 6c (insgesamt mit 6 bezeichnet) angeordnet. Diese sind in einer üblichen Aufstellungsweise der Tragstruktur 1 (wie in Fig. 1 gezeigt) im Wesentlichen horizontal ausgerichtet, d.h. eine Zentralachse der Horizontalringe 6 ist im Wesentlichen vertikal ausgerichtet. Die Horizontalringe 6 sind im Wesentlichen koaxial zueinander und beabstandet voneinander angeordnet. Am oberen Ende ist ein Kopfring 8 koaxial zu den Horizontalringen 6 angeordnet und am Fußende 4 ist ein Grundring 10 ebenfalls im Wesentlichen koaxial zu den Horizontalringen 6 angeordnet. Zwischen den Horizontalringen 6 sowie zwischen dem untersten Horizontalring 6c und dem Grundring und dem obersten Horizontalring 6a und dem Kopfring 8 ist eine Mehrzahl an Stabwerkelementen 12 (in Fig. 1 nur zwei mit Bezugszeichen versehen) angeordnet. Die Stabwerkelemente 12 sind gemäß diesem Ausführungsbeispiel im Wesentlichen kreuzförmig und weisen vier Schenkel 14a, 14b, 14c, 14d (insgesamt mit 14 bezeichnet) auf, die mittels eines Verbindungsstücks 16 miteinander verbunden sind. Sämtliche Stäbe, Stabwerkelemente 12 und Horizontalringe 6 sind vorzugsweise aus vorgefertigten Rohrsegmenten, wie etwa HFI-Rohrsegmenten zusammengesetzt.

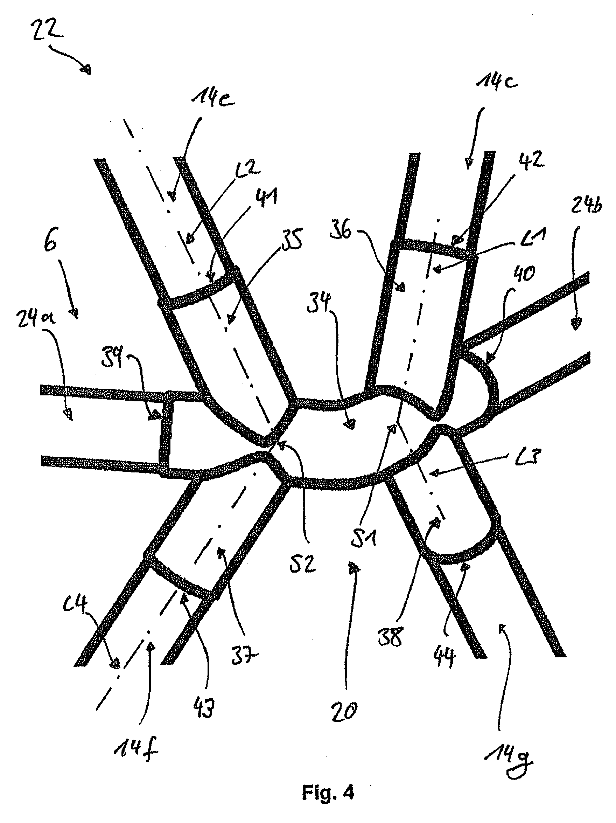

In jeder Etage 18 der Tragstruktur 1, die durch die Horizontalringe 6 definiert sind, sind gemäß diesem Ausführungsbeispiel (Fig. 1) jeweils sechs Stabwerkelemente 12 vorgesehen. Diese sind im Wesentlichen ringförmig benachbart zueinander und leicht schräg bezogen auf eine Vertikalachse angeordnet, so dass jede Etage 18 und die Tragstruktur 1 insgesamt eine im Wesentlichen kegelstumpfförmige Konfiguration aufweist. Die einzelnen Etagen 18 weisen im Wesentlichen einen sechseckigen Querschnitt auf, da sechs Stabwerkelemente 12 je Etage 18 vorgesehen sind. Daher weisen auch die Horizontalringe 6 eine im Wesentlichen sechseckige Grundform auf, wobei die Ecken durch kreisbogenförmig gekrümmte Abschnitte 20 ersetzt sind. Gemäß diesem Ausführungsbeispiel (Fig. 1) ist der kreisbogenförmig gekrümmte Abschnitt 20 in einem Verbindungs-Knoten 22 ausgebildet, der mit Bezug auf Fig. 4 weiter unten detailliert erläutert werden wird. Aufgrund dieser Konfiguration wird die Tragstruktur 1 gemäß dem ersten Ausführungsbeispiels auch als "Hexabase" oder "Rounded Nodes Hexabase" bezeichnet.

Der kreisbogenförmig gekrümmte Abschnitt 20 ist zwischen den Schnittpunkten S1, S2 zweier benachbarter Schenkel zweier benachbarter Stabwerkelemente 12 ausgebildet. Die Schnittpunkte S1, S2 sind beabstandet voneinander. Auch wenn in Fig. 1 nur ein gekrümmter Abschnitt 20 sowie zwei Schnittpunkte S1, S2 mit Bezugszeichen versehen sind, soll verstanden werden, dass solche gekrümmten Abschnitte 20 zwischen jedem der Schnittpunkte zweier Schenkel 14 zweier benachbarter Stabwerkelemente 12 vorgesehen sind.

Der Abschnitt zwischen den Schnittpunkten jeweils zweier Schenkel 14a, 14b und 14c, 14d desselben Stabwerkelements 12 mit dem entsprechenden Horizontalring 6b, 6c ist gemäß diesem Ausführungsbeispiel nicht gekrümmt, sondern gerade ausgebildet. Dazu ist zwischen den entsprechenden Verbindungs-Knoten 22 (in Fig. 1 nur eines mit Bezugszeichen versehen) ein gerades Rohr 24 (in Fig. 1 nur eines mit Bezugszeichen versehen) angeordnet. Demnach wechseln sich umlaufend in einem Horizontalring 6 gemäß diesem Ausführungsbeispiel jeweils ein kreisbogenförmig gekrümmter Abschnitt 20 und ein gerades Rohr 24 ab.

Der Grundring 10 besteht gemäß diesem Ausführungsbeispiel im Wesentlichen aus geraden Rohren 11, die mittels Fußknoten 26 mit sechs entsprechenden Stabwerkelementen 12 verbunden sind. Der Grundring 10 weist gemäß diesem Ausführungsbeispiel keinen gekrümmten Abschnitt auf. An den Fußknoten 26 sind Füße 28 angeordnet, mittels denen die Tragstruktur 1 beispielsweise mit einem Betonfundament oder Rammpfählen (beides in den Figuren nicht gezeigt) verbindbar ist, um diese auf dem Meeresgrund fest zu verankern. Die Fußknoten können beispielsweise wie in DE 20 2011 101 599 U1 offenbart ausgebildet sein.

An dem Kopfende 2 der Tragstruktur 1 ist eine Schnittstelle 30 für die Aufnahme einer Windenergieanlage angeordnet. Die Schnittstelle 30 ist dazu mit den oberen Knoten 32 mit der obersten Etage 18 verbunden. An der Schnittstelle 30 ist zudem eine Arbeitsplattform 34 angeordnet. An dieser Arbeitsplattform 34 können beispielsweise Serviceboote anlegen, mit denen Servicemitarbeiter zu der Tragstruktur 1 fahren, um eine an dieser angeordnete Windenergieanlage zu warten.

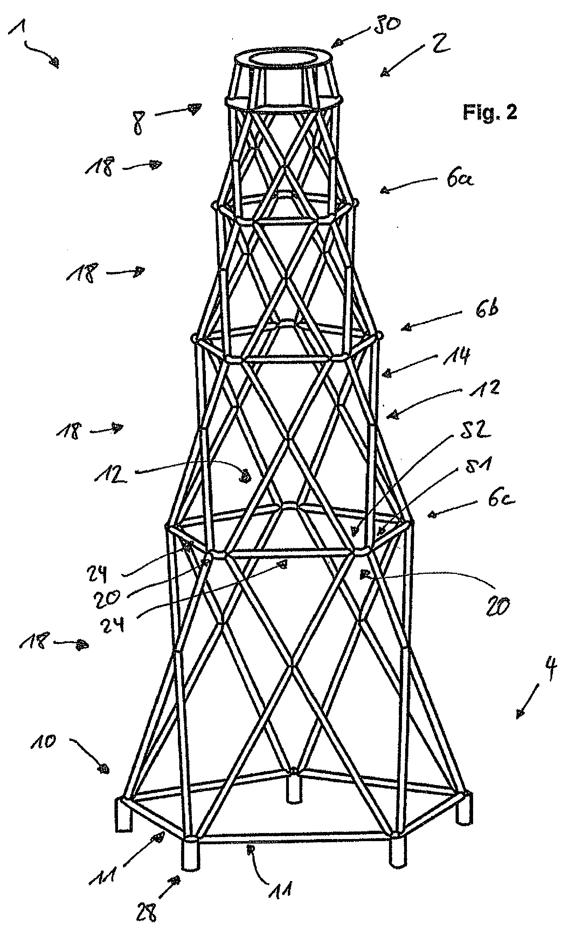

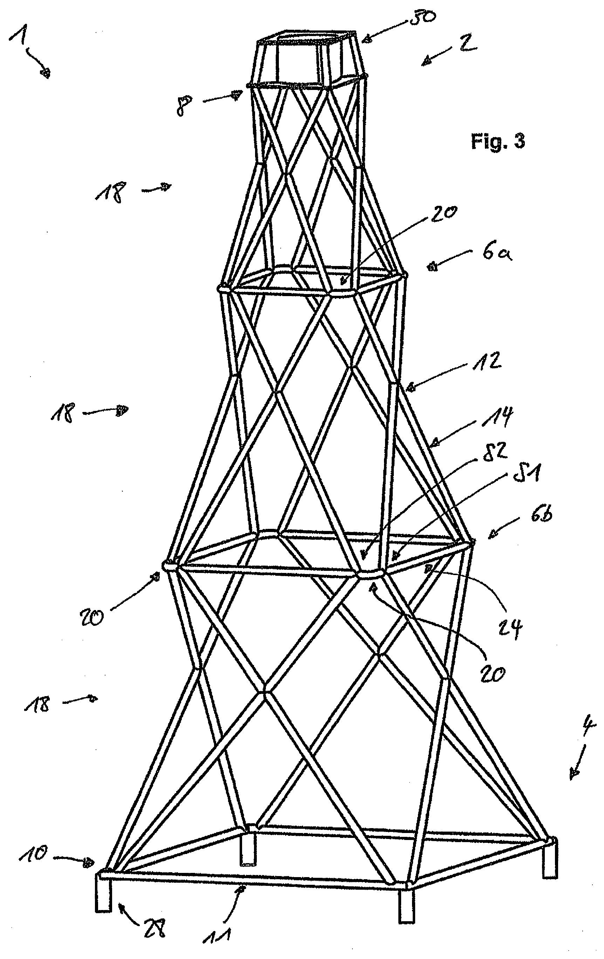

Die Tragstrukturen 1 gemäß dem zweiten und dritten Ausführungsbeispiel (Figuren 2 und 3) weisen eine Vielzahl von gemeinsamen Merkmalen mit der Tragstruktur 1 gemäß dem ersten Ausführungsbeispiel (Fig. 1) auf und werden im Folgenden gemeinsam beschrieben. Gleiche und ähnliche Elemente sind mit gleichen Bezugszeichen versehen. Insofern wird vollumfänglich auf die obige Beschreibung zu Fig. 1 Bezug genommen.

Der wesentliche Unterschied des zweiten und dritten Ausführungsbeispiels von dem ersten Ausführungsbeispiel besteht in der Anzahl der Stabwerkelemente 12 je Etage 18 und auch in der generellen Grundform des Horizontalrings 6. Während im ersten Ausführungsbeispiel (Fig. 1) sechs Stabwerkelemente 12 je Etage 18 vorgesehen sind und der Horizontalring 6 eine im Allgemeinen sechseckige Grundform aufweist, sind im zweiten Ausführungsbeispiel (Fig. 2) fünf Stabwerkelemente 12 je Etage 18 vorgesehen und der Horizontalring 6 weist eine fünfeckige Grundform auf. Entsprechendes gilt für das dritte Ausführungsbeispiel (Fig. 3), in dem nur vier Stabwerkelemente 12 je Etage 18 vorgesehen sind und der Horizontalring 6 demnach eine im Allgemeinen viereckige Grundform aufweist. Daher wird die Tragstruktur gemäß dem zweiten Ausführungsbeispiel auch als "Pentabase" und diejenige des dritten Ausführungsbeispiels als "Quadbase" bezeichnet.

Welche Tragstruktur 1 zum Einsatz kommt, ist im Wesentlichen abhängig von der Meerestiefe an der betreffenden Stelle sowie der durch die Tragstruktur aufzunehmenden Last. Während sich eine Tragstruktur 1 gemäß dem ersten Ausführungsbeispiel (Fig. 1) insbesondere für große Meerestiefen und hohe Lasten eignet, ist eine Tragstruktur, wie sie in Ausführungsbeispiel 3 gezeigt ist (Fig. 3), bevorzugt für geringere Lasten und Meerestiefen einsetzbar. Daher weist die Tragstruktur 1 gemäß dem dritten Ausführungsbeispiel (Fig. 3) auch nur drei Etagen 18 auf, während die Tragstrukturen gemäß den ersten beiden Ausführungsbeispielen (Figuren 1 und 2) jeweils vier Etagen 18 aufweisen.

Ein weiterer Unterschied des zweiten und dritten Ausführungsbeispiels in Bezug auf das erste Ausführungsbeispiel liegt darin, dass keine Verbindungs-Knoten 22 vorgesehen sind. Vielmehr bestehen die Horizontalringe 6 aus einem Stück und die Schenkel 14 der Stabwerkelemente 12 sind direkt mit den Horizontalringen 6 verbunden. Ebenso wie im ersten Ausführungsbeispiel ist jedoch auch der Abschnitt zwischen den Schnittpunkten S1 und S2 jeweils zweier benachbarter Schenkel 14 zweier benachbarter Stabwerkelemente 12 als gekrümmter Abschnitt 20 ausgebildet, während der Abschnitt zwischen zwei Schenkeln 14 desselben Stabwerkelements 12 als gerades Rohr 24 ausgebildet ist.

Die Bogenlänge der kreisbogenförmig gekrümmten Abschnitte 20 ist jeweils abhängig von der Anzahl an Stabwerkelementen 12 je Etage 18. Während die Bogenlänge der kreisbogenförmig gekrümmten Abschnitte 20 gemäß dem ersten Ausführungsbeispiel jeweils einem Winkelabschnitt von 60° entsprechen, entsprechen die Bogenlängen der kreisbogenförmig gekrümmten Abschnitte 20 gemäß dem dritten Ausführungsbeispiel (Fig. 3) einem Winkel von 90°. Gemein ist allen drei Ausführungsbeispielen jedoch, dass sich innerhalb eines umlaufenden Horizontalrings 6 jeweils kreisbogenförmig gekrümmte Abschnitte 20 und gerade Rohre 24 abwechseln. Auch wenn in den Ausführungsbeispielen gemäß Fig. 2 und Fig. 3 keine Verbindungs-Knoten vorgesehen sind, soll jedoch verstanden werden, dass dies selbstverständlich möglich ist.

Fig. 4 illustriert eine Detaildarstellung eines Verbindungs-Knotens 22. Der Verbindungs-Knoten 22 verbindet vier Stabwerkelemente 12, von denen jeweils nur ein Schenkel 14c, 14e, 14f, 14g in Fig. 4 gezeigt ist, mit einem Horizontalring 6, von dem zwei gerade Rohre 24a und 24b in Fig. 4 gezeigt sind. Der Verbindungs-Knoten 22 ist dabei Teil des Horizontalrings 6.

Der Verbindungs-Knoten 22 ist aus mehreren Rohrstücken 34, 35, 36, 37, 38 zusammengesetzt, insbesondere geschweißt. Das Rohrstück 34 bildet den Grundkörper des Verbindungs-Knotens 22. Der Grundkörper 34 an sich ist einstückig und weist keine Schweißnähte auf. Der Grundkörper 34 beinhaltet den kreisförmig gekrümmten Abschnitt 20 und bildet den Teil des Horizontalrings 6. Dazu weist der Grundkörper 34 an zwei Enden jeweils eine Ringsegment-Aufnahme 39, 40 auf, mittels denen die geraden Rohren 24a, 24b mit dem Verbindungs-Knoten 22 verbunden sind. Gemäß diesem Ausführungsbeispiel sind die Ringsegment-Aufnahmen 39, 40 als Doppelrohrkonstruktion ausgebildet und die beiden geraden Rohre 24a, 24b sind mittels Orbitalschweißen an den Ringsegment-Aufnahmen 39, 40 mit den Verbindungs-Knoten 22 verbunden.

An dem Grundkörper 34 sind vier Rohrstücke 35, 36, 37, 38 angeordnet, die jeweils eine Stabwerk-Aufnahme 41, 42, 43, 44 für die Schenkel 14c, 14e, 14f, 14g der Stabwerkelemente 14 bilden. Auch diese Stabwerk-Aufnahmen 41, 42, 43, 44 sind als Doppelrohrkonstruktionen ausgebildet, so dass die Schenkel 14c, 14e, 14f, 14g jeweils mittels Orbitalschweißen mit diesen verbunden sind.

Indem der kreisbogenförmig gekrümmte Abschnitt 20 in dem Grundkörper ausgebildet ist, sind die beiden geraden Rohre 24a, 24b in einem Winkel zueinander verbunden. Der kreisbogenförmig gekrümmte Abschnitt 20 ist dabei zwischen den beiden Schnittpunkten S1, S2 ausgebildet. Der Schnittpunkt S1 ist definiert durch den Schnittpunkt der Längsachsen L1, L3 der Schenkel 14c und 14g. Der Schnittpunkt S2 entsprechend durch den Schnittpunkt der Längsachsen L2 und L4 der Schenkel 14e und 14f. Indem die beiden Schnittpunkte S1, S2 beabstandet voneinander sind, werden sich überlappende Schweißnähte oder nahe beieinanderliegende Schweißnähte vermieden. Dadurch ist die Stabilität wesentlich verbessert.

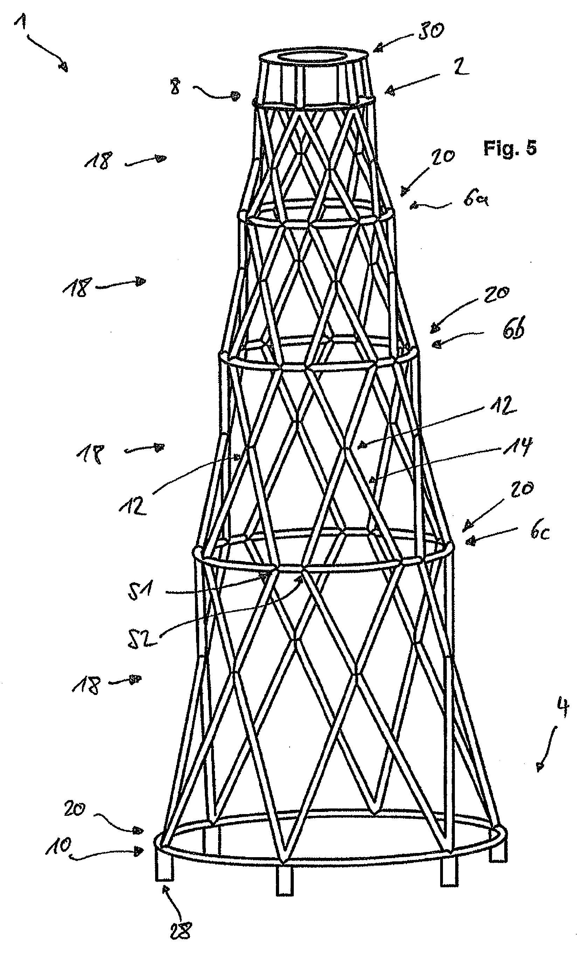

Die Figuren 5 bis 7 illustrieren drei weitere Ausführungsbeispiele der Tragstruktur 1, die wie auch die Ausführungsbeispiele 1 bis 3 eine Vielzahl von gemeinsamen Merkmalen aufweisen. Sie werden im Folgenden gemeinsam beschrieben werden. Gleiche und ähnliche Elemente sind mit gleichen Bezugszeichen versehen, so dass vollumfänglich auf die obige Beschreibung zu den Figuren 1 bis 4 Bezug genommen wird.

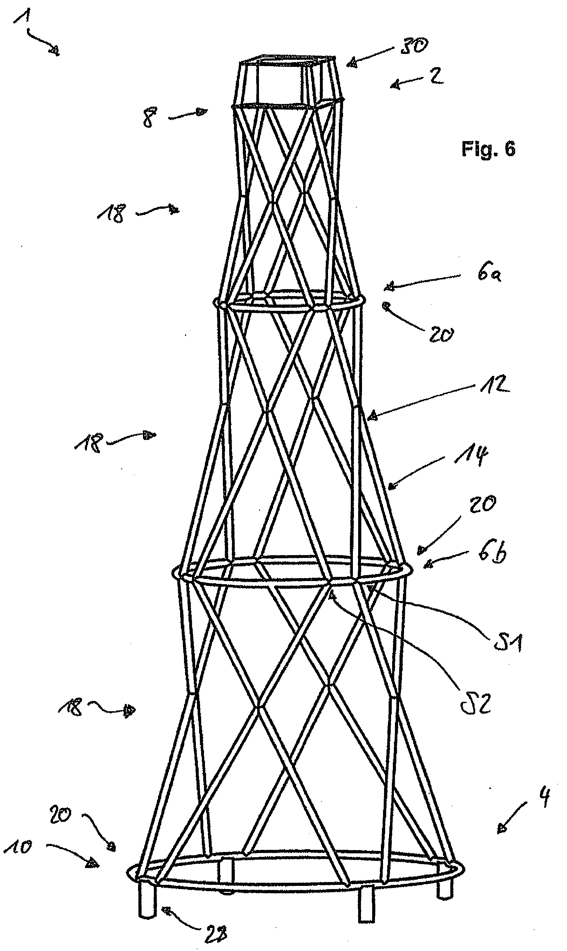

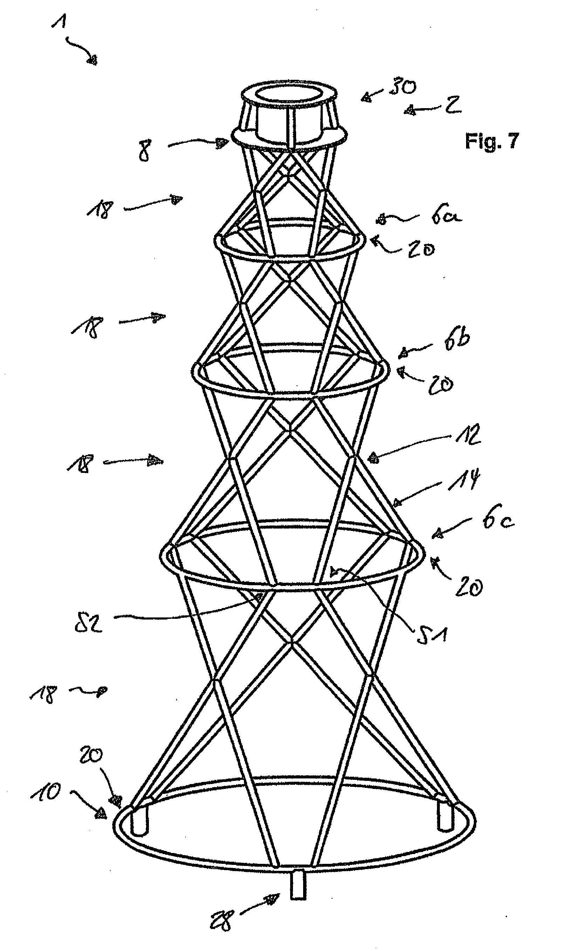

Die einzelnen Ausführungsbeispiele gemäß den Figuren 5, 6 und 7 unterscheiden sich im Wesentlichen durch die Anzahl an Stabwerkelementen 12 je Etage 18 sowie durch die Anzahl der Etagen 18. Während die Tragstruktur 1 gemäß Fig. 5 vier Etagen 18 mit jeweils sechs Stabwerkelementen 12 aufweist, weist die Tragstruktur 1 gemäß Fig. 6 nur vier Stabwerkelemente je Etage 18 auf, und auch nur drei Etagen 18. Die Tragstruktur 1 gemäß Fig. 7 weist wiederum 4 Etagen 18 auf, jedoch sind in jeder Etage 18 nur drei Stabwerkelemente angeordnet.

Im Unterschied zu den Ausführungsbeispielen gemäß den Figuren 1 bis 3 sind die Horizontalringe 6 gemäß den Ausführungsbeispielen in den Figuren 5 bis 7 kreisförmig ausgebildet. Das heißt sie sind vollständig kreisbogenförmig gekrümmt. Wie leicht aus den Figuren 5 bis 7 ersichtlich, ist der Durchmesser des kreisförmigen Horizontalrings 6 sowie die Aufteilung der einzelnen Stabwerke 12, welche mit den Horizontalringen 6 verbunden sind, so gewählt, dass die Schnittpunkte S1, S2 zweier benachbarter Schenkel 14 zweier benachbarter Stabwerkelemente 12 in einer Etage 18 jeweils deutlich voneinander beabstandet sind. Dadurch ist die Stabilität weiter erhöht. Zudem ist die Krümmung in dem Abschnitt zwischen den Schnittpunkten S1, S2 weniger groß als in den ersten Ausführungsbeispielen (siehe Figuren 1 bis 3). Da auch die Abschnitte zwischen den Schenkeln 14 desselben Stabwerkelements 12 kreisbogenförmig gekrümmt ist, muss der Abschnitt zwischen den Schnittpunkten S1, S2 keinen so großen Winkelbereich ausgleichen und dadurch weniger stark gekrümmt sein. Dies ist für die Krafteinleitung vorteilhaft und fördert so die Stabilität. Ferner führt auch die kreisförmige Gestaltung der Horizontalringe zu einem optisch ansprechenderen Eindruck.

Gemäß den Ausführungsbeispielen der Figuren 5 bis 7 ist ebenfalls kein Verbindungs-Knoten vorgesehen. Vielmehr sind die einzelnen Horizontalringe 6 als einstückige kreisförmige Horizontalringe ausgebildet und die einzelnen Stabwerkelemente 12 sind direkt mit diesen verbunden. Allerdings ist es selbstverständlich möglich, Verbindungs-Knoten, wie in Fig. 4 gezeigt, bei Tragstrukturen 1 gemäß dem vierten bis sechsten Ausführungsbeispiel einzusetzen.

## Patentansprüche

1. Offshore-Tragstruktur (1) für Windenergieanlagen, mit
mehreren übereinander angeordneten Horizontalringen (6), welche jeweils durch mehrere Stabwerkelemente (12) im Wesentlichen koaxial zueinander verbunden sind,
**dadurch gekennzeichnet, dass** die Horizontalringe (6) bogenförmig gekrümmte Abschnitte (20) aufweisen.

2. Tragstruktur nach Anspruch 1,
**dadurch gekennzeichnet, dass** die Stabwerkelemente (12) ringförmig benachbart zueinander angeordnet sind, wobei jeweils wenigstens ein unterer Schenkel (14) des Stabwerkelements (12) mit einem unteren Horizontalring (6) und wenigstens ein oberer Schenkel (14) mit einem oberen Horizontalring (6) verbunden ist.

3. Tragstruktur nach Anspruch 1 oder 2,
**dadurch gekennzeichnet, dass** Schnittpunkte (S1, S2) zweier benachbarter Schenkel (14) benachbarter Stabwerkelemente (12) mit dem jeweiligen Horizontalring (6) beabstandet voneinander sind.

4. Tragstruktur nach einem der vorstehenden Ansprüche,
**dadurch gekennzeichnet, dass** wenigstens der Abschnitt des Horizontalrings (6), welcher zwischen zwei Schnittpunkten (S1, S2) mit benachbarten Stabwerkelementen (12) liegt, bogenförmig gekrümmt ist.

5. Tragstruktur nach einem der vorstehenden Ansprüche,
**dadurch gekennzeichnet, dass** jeweils der Abschnitt (24) eines Horizontalrings (6) zwischen zwei Schnittpunkten (S1, S2) mit zwei oder mehr Schenkeln (14) desselben Stabwerkelements (12) gerade ausgebildet ist.

6. Tragstruktur nach einem der Ansprüche 1 bis 4,
**dadurch gekennzeichnet, dass** jeweils der Abschnitt eines Horizontalrings (6) zwischen zwei Schnittpunkten (S1, S2) mit zwei oder mehr Schenkeln (14) desselben Stabwerkelements (12) bogenförmig gekrümmt ausgebildet ist.

7. Tragstruktur nach einem der Ansprüche 1 bis 4 oder 6,
**dadurch gekennzeichnet, dass** der Horizontalring (6) kreisförmig ausgebildet ist.

8. Tragstruktur nach einem der vorstehenden Ansprüche,
**dadurch gekennzeichnet, dass** zur Verbindung der Stabwerkelemente (12) mit den Horizontalringen (6) Verbindungs-Knoten (22) vorgesehen sind.

9. Tragstruktur nach Anspruch 8,
**dadurch gekennzeichnet, dass** der Verbindungs-Knoten (22) wenigstens vier Stabwerk-Aufnahmen (41, 42, 43, 44), jeweils zwei für zwei (41, 42) obere Stabwerkelemente (12) und zwei (43, 44) für zwei untere Stabwerkelemente (12), aufweist.

10. Tragstruktur nach Anspruch 9,
**dadurch gekennzeichnet, dass** der Verbindungs-Knoten (22) ferner zwei Ringsegment-Aufnahmen (39, 40) für Segmente (24a, 24b) des Horizontalrings (6) aufweist.

11. Tragstruktur nach einem der Ansprüche 8 bis 10,
**dadurch gekennzeichnet, dass** der Verbindungs-Knoten (22) wenigstens abschnittsweise (20) bogenförmig gekrümmt ist.

12. Tragstruktur nach Anspruch 11,
**dadurch gekennzeichnet, dass** der Abschnitt (20) zwischen den Ringsegment-Aufnahmen (39, 40) des Verbindungs-Knotens (22) bogenförmig gekrümmt ausgebildet ist.

13. Tragstruktur nach einem der vorstehenden Ansprüche,
**dadurch gekennzeichnet, dass** der bogenförmig gekrümmte Abschnitt (20) abschnittsweise oder vollständig
- kreisbogenförmig, und/oder
- parabelförmig, und/oder
- ellipsenförmig ausgebildet ist.

14. Tragstruktur nach einem der vorstehenden Ansprüche,
**dadurch gekennzeichnet, dass** in jeder Etage (18) der Tragstruktur (1) drei oder mehr, insbesondere vier, fünf oder sechs, Stabwerkelemente (12) vorgesehen sind, die vorzugsweise im Wesentlichen eine X-Form bilden.

15. Tragstruktur nach einem der vorstehenden Ansprüche,
**dadurch gekennzeichnet, dass** an einem Ende (4) der Tragstruktur (1) ein Grundring (10) angeordnet ist, an dem Füße (28) zur Verbindung mit einem Fundament montiert sind.

16. Tragstruktur nach Anspruch 13,
**dadurch gekennzeichnet, dass** an einem dem Grundring (10) gegenüberliegenden Ende (2) der Tragstruktur (1) ein Kopfring (8) mit einer Schnittstelle (30) zur Montage eines Turms einer Windenergieanlage angeordnet ist.

17. Tragstruktur nach einem der vorstehenden Ansprüche,
**dadurch gekennzeichnet, dass** die Stabwerkelemente (12) und/oder die Horizontalringe (6) im Wesentlichen aus HFI (Hochfrequenz-Induktionsschweißen)-Rohren zusammengesetzt sind.

18. Verbindungs-Knoten (22) für eine Offshore-Tragstruktur (1) für Windenergieanlagen, insbesondere nach einem der vorstehenden Ansprüche zur Verwendung in einer Tragstruktur (1) nach einem der Ansprüche 8 bis 12.

## Claims

1. An offshore bearing structure (1) for wind energy plants, having
a plurality of horizontal rings (6) that are arranged one above the other and are each connected substantially coaxially to one another by a plurality of rod-type frame elements (12),
**characterised in that** the horizontal rings (6) have sections (20) that are curved in an arc.

2. A bearing structure according to Claim 1,
**characterised in that** the rod-type frame elements (12) are arranged in a ring shape adjacent to one another, wherein in each case at least one lower limb (14) of the rod-type frame element (12) is connected to a lower horizontal ring (6) and at least one upper limb (14) is connected to an upper horizontal ring (6).

3. A bearing structure according to Claim 1 or 2,
**characterised in that** intersection points (S1, S2) of two adjacent limbs (14) of adjacent rod-type frame elements (12) are spaced from one another by the respective horizontal ring (6).

4. A bearing structure according to one of the preceding claims,
**characterised in that** at least the section of the horizontal ring (6) that lies between two intersection points (S1, S2) having adjacent rod-type frame elements (12) is curved in an arc.

5. A bearing structure according to one of the preceding claims,
**characterised in that** in each case the section (24) of a horizontal ring (6) between two intersection points (S1, S2) having two or more limbs (14) of the same rod-type frame element (12) is constructed to be straight.

6. A bearing structure according to one of Claims 1 to 4,
**characterised in that** in each case the section of a horizontal ring (6) between two intersection points (S1, S2) having two or more limbs (14) of the same rod-type frame element (12) is constructed to be curved in an arc.

7. A bearing structure according to one of Claims 1 to 4 or 6,
**characterised in that** the horizontal ring (6) is constructed to be circular.

8. A bearing structure according to one of the preceding claims,
**characterised in that** connection nodes (22) are provided for connecting the rod-type frame elements (12) to the horizontal rings (6).

9. A bearing structure according to Claim 8,
**characterised in that** the connection node (22) has at least four rod-type frame receivers (41, 42, 43, 44), in each case two for two (41, 42) upper rod-type frame elements (12) and two (43, 44) for two lower rod-type frame elements (12).

10. A bearing structure according to Claim 9,
**characterised in that** the connection node (22) further has two ring segment receivers (39, 40) for segments (24a, 24b) of the horizontal ring (6).

11. A bearing structure according to one of Claims 8 to 10,
**characterised in that** the connection node (22) is curved in an arc, at least in certain sections (20).

12. A bearing structure according to Claim 11,
**characterised in that** the section (20) between the ring segment receivers (39, 40) of the connection node (22) is constructed to be curved in an arc.

13. A bearing structure according to one of the preceding claims,
**characterised in that** the section (20) that is curved in an arc is constructed, in certain sections or entirely, to be
- in the form of a circle arc, and/or
- in the form of a parabola, and/or
- in the form of an ellipse.

14. A bearing structure according to one of the preceding claims,
**characterised in that** on each level (18) of the bearing structure (1) there are provided three or more, in particular four, five or six rod-type frame elements (12) which preferably substantially form an X shape.

15. A bearing structure according to one of the preceding claims,
**characterised in that** at one end (4) of the bearing structure (1) there is arranged a base ring (10) on which there are mounted feet (28) for connecting to a foundation.

16. A bearing structure according to Claim 13,
**characterised in that** at one end (2) of the bearing structure (1), opposite the base ring (10), there is arranged a header ring (8) having an interface (30) for mounting a tower of a wind energy plant.

17. A bearing structure according to one of the preceding claims,
**characterised in that** the rod-type frame elements (12) and/or the horizontal rings (6) are substantially composed of HFI (high-frequency induction-welded) pipes.

18. A connection node (22) for an offshore bearing structure (1) for wind energy plants, in particular according to one of the preceding claims, for use in a bearing structure (1) according to one of Claims 8 to 12.

## Revendications

1. Structure porteuse offshore (1) pour des éoliennes avec
plusieurs anneaux horizontaux (6) disposés les uns au-dessus des autres qui sont reliés sensiblement coaxialement entre eux respectivement par plusieurs éléments de poutre (12),
**caractérisée en ce que** les anneaux horizontaux (6) présentent des sections (20) courbées en arc.

2. Structure porteuse selon la revendication 1, **caractérisée en ce que** les éléments de poutre (12) sont disposés en anneau de manière contiguë les uns aux autres, respectivement au moins une branche inférieure (14) de l'élément de poutre (12) étant reliée à un anneau horizontal inférieur (6) et au moins une branche supérieure (14) étant reliée à un anneau horizontal supérieur (6).

3. Structure porteuse selon la revendication 1 ou 2,
**caractérisée en ce que** des points d'intersection (S1, S2) de deux branches contiguës (14) d'éléments de poutre (12) contigus avec l'anneau horizontal respectif (6) sont espacés l'un de l'autre.

4. Structure porteuse selon l'une quelconque des revendications précédentes,
**caractérisée en ce qu'**au moins la section de l'anneau horizontal (6) qui se trouve entre deux points d'intersection (S1, S2) avec des éléments de poutre (12) contigus, est courbée en arc.

5. Structure porteuse selon l'une quelconque des revendications précédentes,
**caractérisée en ce que** respectivement la section (24) d'un anneau horizontal (6) est réalisée droite entre deux points d'intersection (S1, S2) avec deux branches (14) ou plus du même élément de poutre (12).

6. Structure porteuse selon l'une quelconque des revendications 1 à 4,
**caractérisée en ce que** respectivement la section d'un anneau horizontal (6) est réalisée courbée en arc entre deux points d'intersection (S1, S2) avec deux branches (14) ou plus du même élément de poutre (12).

7. Structure porteuse selon l'une quelconque des revendications 1 à 4 ou 6,
**caractérisée en ce que** l'anneau horizontal (6) est réalisé circulaire.

8. Structure porteuse selon l'une quelconque des revendications précédentes,
**caractérisée en ce que** des noeuds de liaison (22) sont prévus pour la liaison des éléments de poutre (12) avec les anneaux horizontaux (6).

9. Structure porteuse selon la revendication 8,
**caractérisée en ce que** le noeud de liaison (22) présente au moins quatre logements de poutres (41, 42, 43, 44) respectivement deux pour deux (41, 42) éléments de poutre supérieurs (12) et deux (43, 44) pour deux éléments de poutre (12) inférieurs.

10. Structure porteuse selon la revendication 9,
**caractérisée en ce que** le noeud de liaison (22) présente de plus deux logements de segments annulaires (39, 40) pour des segments (24a, 24b) de l'anneau horizontal (6).

11. Structure porteuse selon l'une quelconque des revendications 8 à 10,
**caractérisée en ce que** le noeud de liaison (22) est courbé en arc au moins par sections (20).

12. Structure porteuse selon la revendication 11, **caractérisée en ce que** la section (20) est réalisée courbée en arc entre les logements de segment annulaire (39, 40) du noeud de liaison (22).

13. Structure porteuse selon l'une quelconque des revendications précédentes,
**caractérisée en ce que** la section courbée en arc (20) est réalisée par section ou entièrement
- en arc de cercle et/ou
- en forme de parabole et/ou
- en forme d'ellipse.

14. Structure porteuse selon l'une quelconque des revendications précédentes,
**caractérisée en ce que** dans chaque étage (18) de la structure porteuse (1), trois ou plus, en particulier quatre, cinq ou six éléments de poutre (12) sont prévus, lesquels forment de préférence sensiblement une forme de X.

15. Structure porteuse selon l'une quelconque des revendications précédentes,
**caractérisée en ce qu'**à une extrémité (4) de la structure porteuse (1), un anneau de base (10) est disposé, sur lequel des pieds (28) sont montés pour la liaison avec une fondation.

16. Structure porteuse selon la revendication 13,
**caractérisée en ce qu'**à une extrémité (2) en regard de l'anneau de base (10) de la structure porteuse (1), un anneau de tête (8) est disposé avec une interface (30) pour le montage d'une tour d'une éolienne.

17. Structure porteuse selon l'une quelconque des revendications précédentes,
**caractérisée en ce que** les éléments de poutre (12) et/ou les anneaux horizontaux (6) sont composés sensiblement de tubes HFI (de soudage par induction haute fréquence).

18. Noeud de liaison (22) pour une structure porteuse offshore (1) pour des éoliennes, en particulier selon l'une quelconque des revendications précédentes pour l'utilisation dans une structure porteuse (1) selon l'une quelconque des revendications 8 à 12.
